# EUROPÄISCHE PATENTSCHRIFT

(11) **EP 2 745 185 B1**
(45) Veröffentlichungstag und Bekanntmachung des Hinweises auf die Patenterteilung: **15.07.2020**
(21) Anmeldenummer: 12812150.6
(22) Anmeldetag: 16.08.2012
(51) Int. Cl.: G06F 1/04, H04L 25/02, H04L 7/10, H04J 3/04, H04J 3/06, H04L 1/00, H04L 7/00

(54) **SENDEANORDNUNG UND VERFAHREN ZUM ÜBERTRAGEN VON SIGNALEN**
TRANSMISSION ARRANGEMENT AND METHOD FOR TRANSMITTING SIGNALS
SYSTÈME D'ÉMISSION ET PROCÉDÉ DE TRANSMISSION DE SIGNAUX

(30) Priorität: 16.08.2011 DE 102011052765
(43) Veröffentlichungstag der Anmeldung: 25.06.2014
(73) Patentinhaber: Silicon Line GmbH, 80687 München (DE)
(72) Erfinder: BLON, Thomas, 80687 München (DE); JANSEN, Florian, 80687 München (DE)
(74) Vertreter: Hofmann, Andreas
(86) Internationale Anmeldenummer: PCT/DE2012/200055
(87) Internationale Veröffentlichungsnummer: WO 2013/023657

(56) Entgegenhaltungen:
- US-A1- 2010 316 099
- "SL83014 by Silicon Line GmbH", , 3. März 2011 (2011-03-03), XP055057661, Gefunden im Internet: URL:http://www.silicon-line.com/SL83014.ht m [gefunden am 2013-03-25]
- "Snapshots of SL83014 by Silicon Line GmbH - *Evidence of publication prior to priority date*", , 3. März 2011 (2011-03-03), XP055057663, Gefunden im Internet: URL:http://www.silicon-line.com/SL83014.ht m [gefunden am 2013-03-25]
- "MIPI Alliance Specification for D-PHY", , 22. September 2009 (2009-09-22), Seiten 1-123, XP055057664, Gefunden im Internet: URL:http://www.mipi.org/specifications/phy sical-layer [gefunden am 2013-03-25]
- DARTNELL P ET AL: "Serdes Framer Interface Level 5 (SFI-5): Implementation Agreement for 40Gb/s Interface for Physical Layer Devices (OIF-SF15-01.01)", OPTICAL INTERNETWORKING FORUM (OIF) , 29. Januar 2002 (2002-01-29), Seite 62pp, XP009119852, Gefunden im Internet: URL:http://www.oiforum.com/public/document s/OIF-SFI5-01.0.pdf [gefunden am 2009-07-22]

## Beschreibung

### Technisches Gebiet

Die vorliegende Erfindung betrifft eine Sendeanordnung gemäß dem Oberbegriff des Anspruchs 1 sowie ein Verfahren gemäß dem Oberbegriff des Anspruchs 11.

### Stand der Technik, insbesondere dessen Nachteile und technische Probleme

Die Bitübertragungsschicht oder physikalische Schicht (PHY) ist die unterste Schicht im O[pen]S[ystems]I[nterconnection]-Schichtenmodell, das auch OSI-Referenzmodell genannt wird und ein Schichtenmodell der Internationalen Organisation für Normung (ISO) bezeichnet, das wiederum als Designgrundlage von Kommunikationsprotokollen in Rechnernetzen dient.

Die Physical Layer (PHY) ist für Combining, F[orward]E[rror]C[orrection], Modulation, Power Control, Spreading (C[ode]D[ivision]M[ultiple]A[ccess]) und dergleichen zuständig und kennt weder Daten noch Anwendungen, sondern nur Nullen und Einsen. PHY stellt der darüber liegenden Sicherungsschicht (D[ata]L[ink]L[ayer]), insbesondere einer Teilschicht namens M[edia]A[ccess]C[ontrol]-Layer, logische Kanäle zur Verfügung (Transportkanäle bei U[niversal]M[obile]T[elecommunications]S[ystem]).

D-PHY ermöglicht grundsätzlich eine flexible, kostengünstige und schnelle serielle Schnittstelle für Kommunikationsverbindungen zwischen Komponenten innerhalb einer mobilen Vorrichtung.

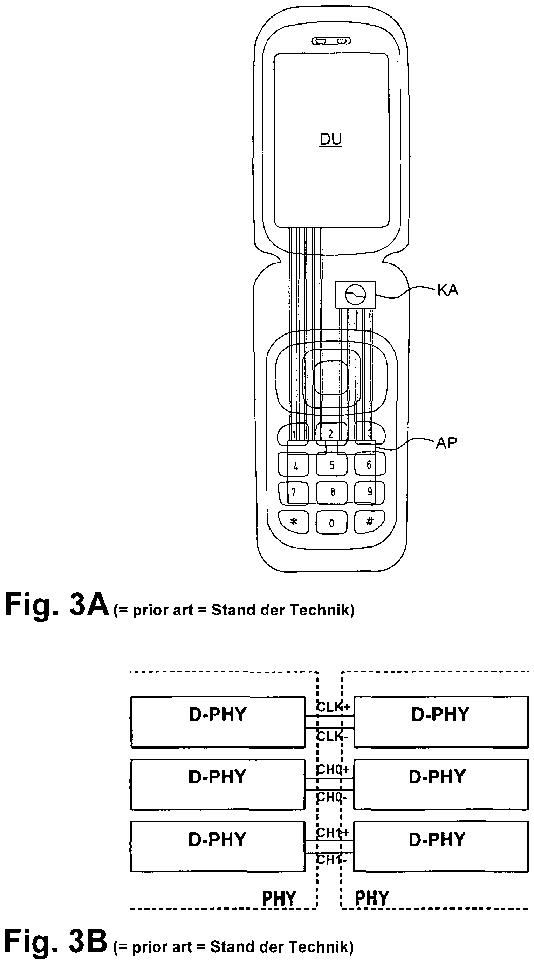

Wie anhand Fig. 3A veranschaulicht, stellt in modernen Mobiltelefonen eine Datenquelle, zum Beispiel ein Applikationsprozessor, am M[obile]I[ndustry]P[rocessor]I[nterface]-D[isplay]S[erial]I[nterface] Bilddaten als D-PHY-Signale für die Darstellung an einer angeschlossenen Datensenke, zum Beispiel an einem angeschlossenen Display, zur Verfügung. Auch kann eine Datensenke, zum Beispiel ein Applikationsprozessor, über ein MIPI-C[amera]S[erial]I[nterface] Bilddaten von einer angeschlossenen Datenquelle, zum Beispiel von einer angeschlossenen Kamera, im D-PHY-Format empfangen.

Ein auf dem D-PHY-Protokoll basierendes DSI oder DSI-2 oder CSI oder CSI-2 oder CSI-3 umfasst bis zu vier differentielle Datenleitungen und eine differentielle Taktleitung, die den Applikationsprozessor elektrisch mittels Kupferkabel mit dem Display und/oder mit der Kamera verbinden. Die Datenrate pro differentieller Datenleitung beträgt bis zu 1,5 Gbps (Gigabit pro Sekunde).

Dieses konventionelle Versenden und Empfangen der D-PHY-DSI- oder D-PHY-CSI-Signale über ein bis vier differentielle Datensignale und eine differentielle Taktleitung ist in der D-PHY-Schnittstellenkonfiguration der Fig. 3B anhand zweier Datenkanäle (= sogenannte data lanes CH0+, CH0- und CH1+, CH1-) und einer Taktleitung (= sogenannte clock lane CLK+, CLK-) zwischen den Modulen der Master-Seite (= Datenquelle, zum Beispiel Kamera und/oder Applikationsprozessor) und den Modulen der Slave-Seite (= Datensenke, zum Beispiel Applikationsprozessor und/oder Anzeigeeinheit) exemplarisch veranschaulicht.

Wie in diesem Zusammenhang aus Fig. 3A ersichtlich ist, werden pro angeschlossenem Display oder pro angeschlossener Kamera bis zu zehn Kupferleitungen zur Datenübertragung benötigt (zum Beispiel viermal zwei Datenleitungen und einmal zwei Taktleitungen).

Im Hinblick auf eine wünschenswerte Reduzierung der Leitungen ist hier eine serialisierte Signal-Übertragung in Erwägung zu ziehen. Eine derartige Serialisierung ist jedoch konventionellerweise durchaus fehleranfällig und nicht selten instabil.

In der vom 3. März 2011 datierenden Informationsschrift "World's first MIPl® D-PHY optical bridge IC for mobile phones" der Firma "Silicon Line GmbH", München, ist ein integrierter Baustein mit der Typenbezeichnung SL83014 angekündigt, ein Brückenschaltkreis, der auf Mobiltelefone abzielt, die den aktuellen D-PHY-Standard der MIPI®-Vereinigung nutzen. Der Schaltkreis soll dazu genutzt werden, Anzeigeschirme, Kameras und Anwendungsprozessoren optisch zu verbinden. Der Schaltkreis akzeptiert bis zu vier Datenpfade, sogenannte data lanes, sowie einen Taktpfad (clock lane) und serialisiert die Daten zur Übertragung über eine optische Hochgeschwindigkeitsverbindung. Sowohl sogenannte HS- (Hochgeschwindigkeit, von 80 Mbps bis 1 Gbps) als auch LP- (niedrige Leistung, bis zu 10 Mbps) Vorwärts-Datenübertragungs-Betriebsarten werden unterstützt. Der SL83014 schließt als optionales Merkmal eine galvanische Verbindung ein, die für eine bidirektionale LP-Datenübertragung genutzt werden kann.

Die Druckschrift US 2010/0316099 A1 offenbart eine Schlafzustand-Umschaltung.

### Darstellung der vorliegenden Erfindung: Aufgabe, Lösung, Vorteile

Die Erfindung ist in den angehängten Ansprüchen definiert. Folgende Ausführungsbeispiele dienen der Veranschaulichung.

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Sendeanordnung der eingangs genannten Art sowie ein Verfahren der eingangs genannten Art so weiterzuentwickeln, dass eine serialisierte Signal-Übertragung stets fehlerfrei und stabil erfolgt.

Diese Aufgabe wird durch eine Sendeanordnung mit den Merkmalen des Anspruchs 1 sowie durch ein Verfahren mit den Merkmalen des Anspruchs 11 gelöst. Vorteilhafte Ausgestaltungen und zweckmäßige Weiterbildungen der vorliegenden Erfindung sind in den jeweiligen Unteransprüchen gekennzeichnet.

Erfindungsgemäß wird also eine Sendeanordnung vorgeschlagen, mittels derer
- die single-ended, auf Logikpegeln basierenden Signalen entsprechenden H[igh]S[peed]-Daten und
- die differentiellen, insbesondere auf common mode basierenden, Signalen entsprechenden L[ow]P[ower]-Daten zu einem gemeinsamen Signalstrom serialisiert werden. Werden die zum Beispiel ein bis vier Datenkanäle serialisiert übertragen, so ist eine fehlerfreie und stabile Übertragung nur möglich, wenn und solange ein Takt am Serialisierungselement oder Serialisierer anliegt.

Nun basiert der durch die Datenquelle bereitgestellte Takt jedoch auf der Annahme einer parallelen Datenübertragung von der Master-Seite (= Datenquelle, zum Beispiel Kamera und/oder Applikationsprozessor) zur Slave-Seite (= Datensenke, zum Beispiel Applikationsprozessor und/oder Anzeigeeinheit). Ist diese parallele Datenübertragung abgeschlossen, so schaltet der Master auch den Takt ab.

Jedoch ist zu bedenken, dass durch den Serialisierungs-/Deserialisierungsprozess mehr Zeit für die serielle Datenübertragung als für die entsprechende parallele Datenübertragung benötigt wird. Würde nun der Takt durch den Master, zum Beispiel durch die Kamera oder durch den Applikationsprozessor, abgeschaltet, bevor alle notwendigen serialisierten Daten übertragen und deserialisiert sind, so würde dies zu Datenverlusten und zu Bitfehlern führen.

Für eine stets fehlerfreie und stabile Übertragung des gemeinsamen Signalstroms aus
- single-ended, auf Logikpegeln basierenden Daten- und Taktsignalen sowie
- differentiellen, insbesondere auf common mode basierenden, Datensignalen,
das heißt zum zuverlässigen Vermeiden von Datenverlusten und von Bitfehlern beim Serialisieren der differentiellen Datenleitungen und der differentiellen Taktleitung insbesondere des D[isplay]S[erial]I[nterface] und/oder des C[amera]S[erial]I[nterface] wird die serialisierte optische und/oder elektrische D-PHY-Verbindung erfindungsgemäß verzögert abgeschaltet.

Unter Einsatz der nachstehend dargelegten Sendeanordnung und Schaltungstechnik ist es möglich, bei abgeschaltetem Takt den noch ausstehenden Teil des serialisierten gemeinsamen Signalstroms zum Empfänger oder zum sogenannten Slave (= Datensenke, zum Beispiel Applikationsprozessor und/oder Anzeigeeinheit) weiter zu transportieren und diesem mitzuteilen, dass der Link oder die Verbindung anschließend abgeschaltet werden soll.

Mithin wird erfindungsgemäß eine stets fehlerfreie und stabile Abschaltung mindestens eines serialisierten Links, insbesondere mindestens eines serialisierten D-PHY-D[isplay]S[erial]I[nterface]- oder D-PHY-C[amera]S[erial]I[nterface]-Links, realisiert.

Die vorliegende Erfindung betrifft des Weiteren mindestens eine Empfangsanordnung, die, insbesondere unter Berücksichtigung der Besonderheiten des D-PHY-Protokolls, mindestens einen mittels mindestens einer Sendeanordnung gemäß der vorstehend dargelegten Art serialisierten und/oder gebündelten gemeinsamen Signalstrom aufnehmen kann, um daraus die, insbesondere bis zu vier, differentiellen Datenleitungen und die differentielle Taktleitung zurückzugewinnen, insbesondere durch Entbündeln.

Die vorliegende Erfindung betrifft des Weiteren mindestens eine Schaltungsanordnung, aufweisend
- mindestens eine Sendeanordnung gemäß der vorstehend dargelegten Art sowie
- mindestens eine Empfangsanordnung gemäß der vorstehend dargelegten Art.

Exemplarisch lässt sich die vorliegende Erfindung beim zumindest vorübergehenden Beenden mindestens einer gleichzeitigen seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, Übertragung sowohl von single-ended, auf Logikpegeln basierenden Daten- und Taktsignalen als auch von differentiellen, insbesondere auf common mode basierenden, Daten- und Taktsignalen, insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera und/oder mindestens einem Applikationsprozessor, und mindestens einer Datensenke, insbesondere mindestens einem Applikationsprozessor und/oder mindestens einer, zum Beispiel hochauflösenden und/oder zum Beispiel als Bildsenke fungierenden, Anzeigeeinheit, zum Beispiel mindestens einem Display oder mindestens einem Monitor, anwenden.

### Kurze Beschreibung der Zeichnungen

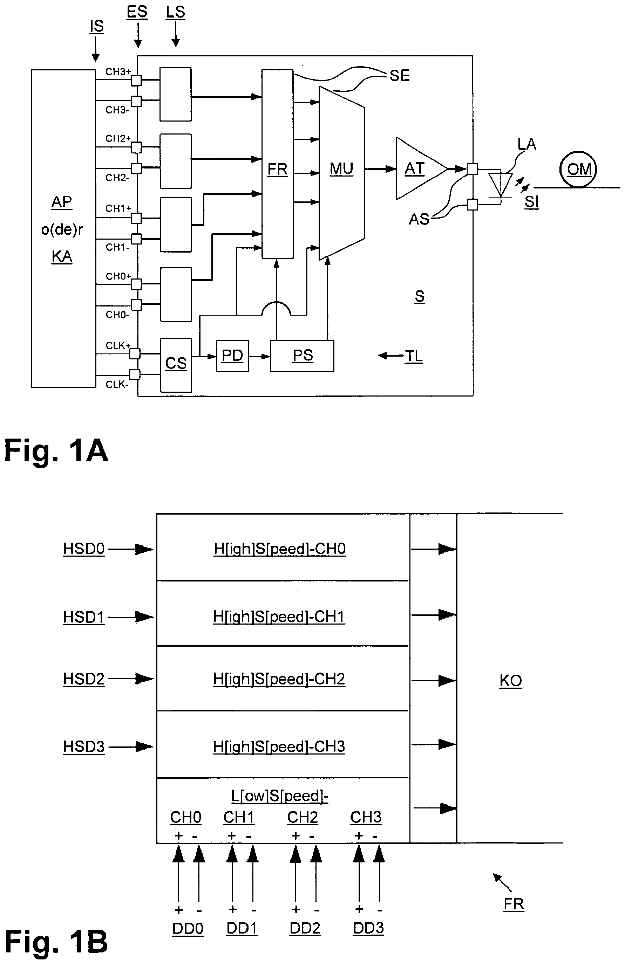

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 11 nachgeordneten Ansprüche verwiesen, andererseits werden weitere Ausgestaltungen, Merkmale und Vorteile der vorliegenden Erfindung nachstehend unter Anderem anhand der durch Fig. 1A bis Fig. 2B veranschaulichten Ausführungsbeispiele näher erläutert.

Es zeigt:
- Fig. 1A: in konzeptuell-schematischer Darstellung ein Ausführungsbeispiel der Sendeanordnung gemäß der vorliegenden Erfindung, die nach dem Verfahren gemäß der vorliegenden Erfindung arbeitet;
- Fig. 1B: in konzeptuell-schematischer Detaildarstellung ein Ausführungsbeispiel des Framers der Sendeanordnung aus Fig. 1A;
- Fig. 2A: in konzeptuell-schematischer Darstellung ein Ausführungsbeispiel der der Sendeanordnung aus Fig. 1A zugeordneten Empfangsanordnung, die nach dem Verfahren gemäß der vorliegenden Erfindung arbeitet;
- Fig. 2B: in konzeptuell-schematischer Detaildarstellung ein Ausführungsbeispiel des Deframers der Empfangsanordnung aus Fig. 2A;
- Fig. 3A: in konzeptuell-schematischer Darstellung ein Beispiel einer Anordnung aus dem Stand der Technik; und
- Fig. 3B: in konzeptuell-schematischer Darstellung ein Beispiel einer der Anordnung aus Fig. 3A zugrunde liegenden Schnittstellenkonfiguration mit zwei Datenkanälen und mit einer Taktleitung.

Gleiche oder ähnliche Ausgestaltungen, Elemente oder Merkmale sind in Fig. 1A bis Fig. 3B mit identischen Bezugszeichen versehen.

### Bester Weg zur Ausführung der vorliegenden Erfindung

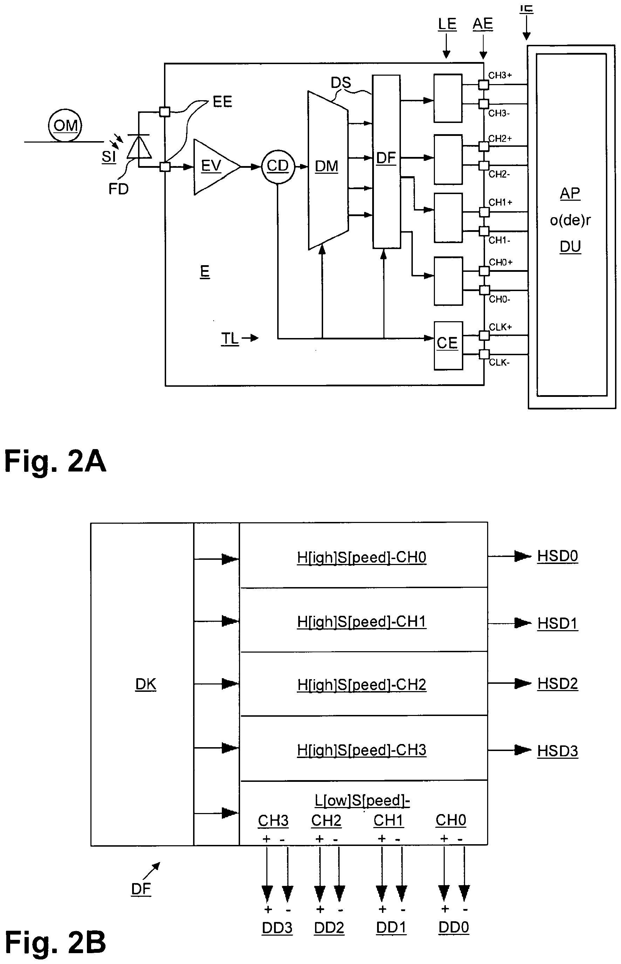

- Mittels des anhand Fig. 1A veranschaulichten Ausführungsbeispiels einer Sendeanordnung S gemäß der vorliegenden Erfindung und
- mittels des anhand Fig. 2A veranschaulichten Ausführungsbeispiels einer Empfangsanordnung E gemäß der vorliegenden Erfindung,
   durch die zusammen ein Ausführungsbeispiel einer Schaltungsanordnung S, E (vgl. Fig. 1A, Fig. 2A) gemäß der vorliegenden Erfindung gebildet wird (im Rahmen der vorliegenden Erfindung ist es möglich, die Sendeanordnung S und die Empfangsanordnung E unabhängig voneinander zu realisieren und zu betreiben), ist es grundsätzlich möglich, eine kabelbasierte Verbindung
- gemultiplext und mithin serialisiert auf optischer Basis, insbesondere auf Basis mindestens eines optischen Mediums, zum Beispiel auf Basis mindestens eines optischen Wellenleiters OM (vgl. hierzu im Detail Fig. 1A, Fig. 2A), wie etwa auf Basis mindestens einer Glasfaser und/oder auf Basis mindestens einer Plastikfaser, und/oder
- nicht gemultiplext auf elektrischer oder galvanischer Basis, insbesondere auf Basis mindestens einer elektrischen oder galvanischen Verbindung, zum Beispiel auf Basis mindestens eines Kupferkabels und/oder auf Basis mindestens einer, etwa auf mindestens einer Leiterplatte angeordneten, elektrischen Leitung,
   zu realisieren und zu betreiben.

Fig. 1A zeigt ein Ausführungsbeispiel für den prinzipiellen Aufbau einer Sendeanordnung S zum Anschluss an eine D[isplay]S[erial]I[nterface]-Datenübertragungsschnittstelle IS oder auch an eine C[amera]S[erial]I[nterface]-Datenübertragungsschnittstelle IS.

Die im Applikationsprozessor AP oder in der Kamera KA generierten Bilddaten werden auf vier Datenleitungen oder Kanälen CH0+, CH0-, CH1+, CH1-, CH2+, CH2-, CH3+, CH3- als D-PHY-Signale an der bis zu vier Bit breiten Datenübertragungsschnittstelle IS zusammen mit D-PHY-korrekten Taktsignalen CLK+, CLK- zur Verfügung gestellt.

Die Sendeanordnung S nimmt diese Signale an einer integrierten Interface-Logik LS auf, deren Blöcke jeweils mindestens einen Zustandsautomaten zur richtigen Interpretation der D-PHY-Logiksignale und zur Unterscheidung zwischen hochfrequenten Datenströmen (sogenannten H[igh]S[peed]-Daten) und niederfrequenten Datenströmen (sogenannten L[ow]S[peed]-Daten) aufweisen können.

Ein in der Sendeanordnung S folgender Framer FR (vgl. hierzu detaillierter Fig. 1B) stellt die D[irect]C[urrent]-Balancierung des Eingangssignals sicher und erzeugt einen auf der Empfangsseite (vgl. Fig. 2A) wiedererkennbaren Rahmen, der es der Empfangsanordnung E (vgl. Fig. 2A) ermöglicht, die empfangenen Daten den richtigen Ausgangsdatenleitungen oder Ausgangskanälen CH0+, CH0-, CH1+, CH1-, CH2+, CH2-, CH3+, CH3- wieder zuzuordnen.

Im Detail kann der Framer FR gemäß Fig. 1B sowohl mit den single-ended, auf Logikpegeln basierenden Datensignalen HSD0, HSD1, HSD2, HSD3 als auch mit den differentiellen Datensignalen DD0+, DD0-, DD1+, DD1-, DD2+, DD2-, DD3+, DD3- beaufschlagt werden. Mittels seines als 5b/6b-Kodierblock ausgebildeten Kodierers KO bettet der Framer FR gemäß Fig. 1B diese differentiellen Datensignale DD0+, DD0-, DD1+, DD1-, DD2+, DD2-, DD3+, DD3- in den Strom der single-ended, auf Logikpegeln basierenden Datensignale HSD0, HSD1, HSD2, HSD3 ein.

Ein sich dem Framer FR anschließender Multiplexer MU, insbesondere H[igh]S[peed]-Mux, erzeugt mit Hilfe eines als Phase-Locked-Loop, insbesondere als C[lock]M[ultiplier]U[nit], ausgebildeten Taktgenerators PS das hochfrequente serielle oder gebündelte Sendesignal, das dem Ausgang AS der Sendeanordnung S mittels eines Ausgangstreiber AT zur Verfügung gestellt wird. Der Framer FR und der Multiplexer MU bilden zusammen den Serialisierer SE.

Hierbei dient das über den Taktport CLK+, CLK- und über das Taktmodul CS der Interface-Logik LS mittels des Taktgenerators PS bereit gestellte D-PHY-Taktsignal als (Takt-)Referenz für den Serialisierer SE, insbesondere für dessen Multiplexer MU, und wird im seriellen Datenstrom, also im serialisierten Ausgangssignal eingebettet. Hierdurch entsteht der gemeinsame Signalstrom SI, der an die Empfangsanordnung E (vgl. Fig. 2A) übermittelt wird.

Wie der Darstellung gemäß Fig. 1A des Weiteren entnehmbar ist, ist der Ausgangstreiber AT als integrierter Lasertreiber zur Ansteuerung mindestens eines direkt angeschlossenen Lasers LA, insbesondere zur Ansteuerung mindestens einer direkt angeschlossener V[ertical]C[avity]S[urface]E[mitting]L[aserdiode], ausgeführt.

Um zu gewährleisten, dass die serialisierte und/oder gebündelte Übertragung der D-PHY-Signale zwischen der Sendeanordnung S (vgl. Fig. 1A) und der Empfangsanordnung E (vgl. Fig. 2A) auf Basis des CSI- und/oder CSI-2- und/oder CSI-3- und/oder DSI- und/oder DSI-2-Protokolls stets fehlerfrei und stabil erfolgt, wird die D-PHY-Verbindung verzögert abgeschaltet, sobald ein sogenannter Stopp-Zustand oder Stop State auf der Taktleitung TL, insbesondere an deren Takteingang, erkannt wird.

Hierzu empfängt ein als Power-Down-Controller ausgestaltetes Erkennungs-/Steuerungsmittel PD unter anderem eine Erkennung des Stopp-Zustands auf der Eingangstaktleitung TL. Dieses Signal wird verzögert an den internen Taktgenerator PS weitergegeben.

Die Erkennung des Stopp-Zustands wird ebenfalls an den aus Framer FR und Multiplexer MU gebildeten Serialisierer SE angelegt, worauf dieser eine bestimmte Sequenz in den serialisierten Signalstrom einfügt. Aufgrund dieser Sequenz kann der Empfänger E (vgl. Fig. 2A) detektieren, dass der Link nach Ablauf einer bestimmten Zeit abgeschaltet werden soll.

Das verzögerte Abschaltsignal schaltet anschließend den internen Taktgenerator PS und andere Blöcke, so etwa den Serialisierer SE, in den Ruhezustand, nachdem, zum Beispiel auf mindestens einer virtuellen Telegramm-Lane, die systemrelevante Information transportiert oder übertragen wurde, dass die serielle Datenverbindung in Kürze gekappt werden wird.

Fig. 2A zeigt ein Ausführungsbeispiel für den prinzipiellen Aufbau der Empfangsanordnung E zum Anschluss an eine D[isplay]S[erial]l[nterface]-Datenübertragungsschnittstelle IE oder auch an eine C[amera]S[erial]l[nterface]-Datenübertragungsschnittstelle IE.

Die von der Sendeanordnung S (vgl. Fig. 1A) ausgesandten seriellen oder gebündelten Daten werden über einen Eingangsverstärker EV der Empfangsanordnung E aufgenommen und einer integrierten Takt- und Datenrückgewinnung CD zugeführt.

Diese integrierte Takt- und Datenrückgewinnung CD regeneriert aus dem gemeinsamen Signalstrom SI den ursprünglichen D-PHY-Takt, der über das Taktmodul CE der Interface-Logik LE direkt dem D[isplay]S[erial]I[nterface] oder dem C[amera]S[erial]I[nterface] wieder zur Verfügung gestellt wird. Der verbleibende serielle Datenstrom wird über einen Demultiplexer DM entbündelt sowie parallelisiert und an einen Deframer DF (vgl. hierzu detaillierter Fig. 2B) übergeben, der grundsätzlich spiegelbildlich zum Framer FR gemäß Fig. 1B aufgebaut ist. Der Demultiplexer DM und der Deframer DF bilden zusammen den Deserialisierer DS.

Im Detail kann der Deframer FR gemäß Fig. 2B mittels seines als 6b/5b-Dekodierblock ausgebildeten Dekodierers DK die differentiellen Datensignale DD0+, DD0-, DD1+, DD1-, DD2+, DD2-, DD3+, DD3- von den single-ended, auf Logikpegeln basierenden Datensignalen HSD0, HSD1, HSD2, HSD3 separieren und die reparallelisierten Datensignale den jeweils zutreffenden Datenleitungen CH0+, CH0-, CH1+, CH1-, CH2+, CH2-, CH3+, CH3- wieder zuordnen.

Die in der Empfangsanordnung E dargestellten Interface-Logik-Blöcke LE können jeweils mindestens einen Zustandsautomaten zur richtigen Interpretation der D-PHY-Logiksignale und zur Unterscheidung zwischen hochfrequenten Datenströmen und niederfrequenten Datenströmen aufweisen.

Wie der Darstellung gemäß Fig. 2A des Weiteren entnehmbar ist, ist der Eingangsverstärker EV als integrierter Transimpedanzverstärker ausgeführt, der es ermöglicht, eine Fotodiode FD direkt an die Empfangsanordnung E anzuschließen.

Auf diese Weise ist es bei der Schaltungsanordnung S, E (vgl. Fig. 1A, Fig. 2A) gemäß der vorliegenden Erfindung möglich, die kabelbasierte gemultiplexte Verbindung zwischen der Sendeanordnung S (vgl. Fig. 1A) und der Empfangsanordnung E (vgl. Fig. 2A) auf optischer Basis, nämlich mittels eines, zum Beispiel in Form einer Glasfaser und/oder in Form einer Plastikfaser ausgebildeten, optischen Wellenleiters OM zu realisieren und zu betreiben.

### Bezugszeichenliste

- E: Empfangsanordnung
- S: Sendeanordnung
- AE: Ausgang der Empfangsanordnung E
- AP: Applikationsprozessor
- AS: Ausgang der Sendeanordnung S
- AT: Ausgangstreiber, insbesondere Lasertreiber
- CD: Takt- und Datenrückgewinnungseinheit
- CE: Taktmodul der Empfangs-Schnittstellen-Logik LE
- CH0±: erste Datenleitung oder erster Kanal
- CH1±: zweite Datenleitung oder zweiter Kanal
- CH2±: dritte Datenleitung oder dritter Kanal
- CH3±: vierte Datenleitung oder vierter Kanal
- CLK±: Taktleitung oder Taktkanal
- CS: Taktmodul der Sende-Schnittstellen-Logik LS
- DD0±: differentielles, insbesondere auf common mode basierendes, Datensignal auf erster Datenleitung oder erstem Kanal CH0±
- DD1±: differentielles, insbesondere auf common mode basierendes, Datensignal auf zweiter Datenleitung oder zweitem Kanal CH1±
- DD2±: differentielles, insbesondere auf common mode basierendes, Datensignal auf dritter Datenleitung oder drittem Kanal CH2±
- DD3±: differentielles, insbesondere auf common mode basierendes, Datensignal auf vierter Datenleitung oder viertem Kanal CH3±
- DF: Deframer
- DK: Dekodierer, insbesondere 6b/5b-Dekodierblock, des Deframers DF
- DM: Demultiplexer
- DS: Deserialisierungselement oder Deserialisierer
- DU: Anzeigeeinheit
- EE: Eingang der Empfangsanordnung E
- ES: Eingang der Sendeanordnung S
- EV: Eingangsverstärker, insbesondere Transimpedanzverstärker
- FD: Fotodiode
- FR: Framer
- HSDO: single-ended, auf Logikpegeln basierendes Datensignal auf erster Datenleitung oder erstem Kanal CH0±
- HSD1: single-ended, auf Logikpegeln basierendes Datensignal auf zweiter Datenleitung oder zweitem Kanal CH1±
- HSD2: single-ended, auf Logikpegeln basierendes Datensignal auf dritter Datenleitung oder drittem Kanal CH2±
- HSD3: single-ended, auf Logikpegeln basierendes Datensignal auf vierter Datenleitung oder viertem Kanal CH3±
- IE: datensenkenbezogene CSI- und/oder CSI-2- und/oder CSI-3- und/oder DSI- und/oder DSI-2-Schnittstelle
- IS: datenquellenbezogene CSI- und/oder CSI-2- und/oder CSI-3- und/oder DSI- und/oder DSI-2-Schnittstelle
- KA: Kamera
- KO: Kodierer, insbesondere 5b/6b-Kodierblock, des Framers FR
- LA: Laser
- LE: Empfangs-Schnittstellen-Logik
- LS: Sende-Schnittstellen-Logik
- MU: Multiplexer
- OM: optisches Medium, insbesondere optischer Wellenleiter, zum Beispiel Glasfaser und/oder Plastikfaser
- PD: Erkennungs-/Steuerungsmittel, insbesondere Power-Down-Controller
- PS: Taktgenerator, insbesondere Phase-Locked-Loop, zum Beispiel Clock Multiplier Unit
- SE: Serialisierungselement oder Serialisierer
- SI: gemeinsamer Signalstrom
- TL: Taktleitung

## Patentansprüche

1. Sendeanordnung (S), die beaufschlagbar ist:
- mit auf mindestens einer Datenleitung (CH0+, CH0-, CH1+, CH1-, CH2+, CH2-, CH3+, CH3-) transportierbaren Datensignalen, wobei auf jeder der Datenleitungen (CH0+, CH0-, CH1+, CH1-, CH2+, CH2-, CH3+, CH3-)
-- sowohl single-ended, auf Logikpegeln basierende Datensignale (HSD0, HSD1, HSD2, HSD3)
-- als auch differentielle, auf common mode basierende Datensignale (DD0+, DD0-, DD1+, DD1-, DD2+, DD2-, DD3+, DD3-) anliegen, und
- mit auf mindestens einer Taktleitung (CLK+, CLK-) transportierbaren Taktsignalen, wobei auf jeder der Taktleitungen (CLK+, CLK-)
-- sowohl single-ended, auf Logikpegeln basierende Taktsignale
-- als auch differentielle, auf common mode basierende Taktsignale anliegen,
- wobei die Sendeanordnung (S) die single-ended, auf Logikpegeln basierenden Daten- sowie Taktsignale und die differentiellen, auf common mode basierenden Daten- sowie Taktsignale zu einem gemeinsamen Signalstrom (SI) serialisiert und
- wobei die Sendeanordnung (S) aufweist:
-- mindestens einen Taktgenerator (PS) zum Erzeugen mindestens eines Referenztakts auf mindestens einer Taktleitung (TL),
-- mindestens einen dem Taktgenerator (PS) nachgeschalteten Serialisierer (SE), der mit einem auf der Taktleitung (TL) erkennbaren Stopp-Zustand beaufschlagt wird und in den gemeinsamen Signalstrom (SI) mindestens eine einem Stopp-Zustand zugeordnete Stopp-Sequenz einfügt, aufgrund welcher Stopp-Sequenz für mindestens eine Empfangsanordnung (E) erkennbar ist, dass die Übertragung des gemeinsamen Signalstroms (SI) nach Ablauf mindestens eines definierten Zeitintervalls abgeschaltet wird, und
-- mindestens ein dem Taktgenerator (PS) vorgeschaltetes Erkennungs-/Steuerungsmittel (PD) zum Erkennen des Stopp-Zustands auf der Taktleitung (TL) und zum zeitlich verzögerten Weitergeben mindestens eines dem Stopp-Zustand zugeordneten Abschaltsignals an den Taktgenerator (PS), mittels welchen Abschaltsignals der Taktgenerator (PS) und der Serialisierer (SE) in den Ruhezustand geschaltet werden.

2. Sendeanordnung gemäß Anspruch 1, **dadurch gekennzeichnet, dass** die Sendeanordnung (S) mindestens einer,
- insbesondere als mindestens eine Kamera (KA) und/oder
- insbesondere als mindestens ein Applikationsprozessor (AP)
ausgebildeten, Datenquelle zugeordnet ist.

3. Sendeanordnung gemäß Anspruch 1 oder 2, **dadurch gekennzeichnet, dass** die Empfangsanordnung (E) mindestens einer,
- insbesondere als mindestens ein Applikationsprozessor (AP) und/oder
- insbesondere als mindestens eine Anzeigeeinheit (DU)
ausgebildeten, Datensenke zugeordnet ist.

4. Sendeanordnung gemäß mindestens einem der Ansprüche 1 bis 3, **dadurch gekennzeichnet, dass** der Taktgenerator (PS) als mindestens eine Phase-Locked-Loop, insbesondere als mindestens eine Clock Multiplier Unit, ausgebildet ist.

5. Sendeanordnung gemäß mindestens einem der Ansprüche 1 bis 4, **dadurch gekennzeichnet, dass** der Serialisierer (SE)
- mindestens einen Framer (FR) zum Erzeugen mindestens eines in der Empfangsanordnung (E) wiedererkennbaren Rahmens für den gemeinsamen Signalstrom (SI) sowie
- mindestens einen dem Framer (FR) nachgeschalteten Multiplexer (MU) zum Erzeugen des gemeinsamen Signalstroms (SI)
aufweist.

6. Sendeanordnung gemäß Anspruch 5, **dadurch gekennzeichnet, dass** der Framer (FR) sowohl mit den single-ended, auf Logikpegeln basierenden Datensignalen (HSD0, HSD1, HSD2, HSD3) als auch mit den differentiellen Datensignalen (DD0+, DD0-, DD1+, DD1-, DD2+, DD2-, DD3+, DD3-) beaufschlagbar ist und mittels mindestens eines Kodierers (KO), insbesondere mittels mindestens eines 5b/6b-Kodierblocks, die differentiellen Datensignale (DD0+, DD0-, DD1+, DD1-, DD2+, DD2-, DD3+, DD3-) in den Strom der single-ended, auf Logikpegeln basierenden Datensignale (HSD0, HSD1, HSD2, HSD3) einbettet.

7. Sendeanordnung gemäß mindestens einem der Ansprüche 1 bis 6, **dadurch gekennzeichnet, dass** das Erkennungs-/Steuerungsmittel (PD) als mindestens ein Power-Down-Controller ausgebildet ist.

8. Sendeanordnung gemäß mindestens einem der Ansprüche 1 bis 7, **dadurch gekennzeichnet, dass** dem Serialisierer (SE) und dem Erkennungs-/Steuerungsmittel (PD) mindestens eine, insbesondere mindestens einer, zum Beispiel bis zu vier Bit breiten, CSI- und/oder CSI-2-und/oder CSI-3- und/oder DSI- und/oder DSI-2-Schnittstelle (IS) der Datenquelle zugeordnete, Sende-Schnittstellen-Logik (LS) zum Aufnehmen der Datensignale und Taktsignale vorgeschaltet ist.

9. Sendeanordnung gemäß Anspruch 8, **dadurch gekennzeichnet, dass** die Sende-Schnittstellen-Logik (LS) mindestens einen Zustandsautomaten zum richtigen Interpretieren der Datensignale aufweist.

10. Schaltungsanordnung (S, E), aufweisend
- mindestens eine Sendeanordnung (S) gemäß mindestens einem der Ansprüche 1 bis 9 sowie
- die mindestens eine Empfangsanordnung (E).

11. Verfahren, wobei
- mindestens eine Sendeanordnung (S) beaufschlagt wird:
-- mit auf mindestens einer Datenleitung (CH0+, CH0-, CH1+, CH1-, CH2+, CH2-, CH3+, CH3-) transportierbaren Datensignalen, wobei auf jeder der Datenleitungen (CH0+, CH0-, CH1+, CH1-, CH2+, CH2-, CH3+, CH3-)
--- sowohl single-ended, auf Logikpegeln basierende Datensignale (HSD0, HSD1, HSD2, HSD3)
— als auch differentielle, auf common mode basierende Datensignale (DD0+, DD0-, DD1+, DD1-, DD2+, DD2-, DD3+, DD3-) anliegen, und
-- mit auf mindestens einer Taktleitung (CLK+, CLK-) transportierbaren Taktsignalen, wobei auf jeder der Taktleitungen (CLK+, CLK-)
---sowohl single-ended, auf Logikpegeln basierende Taktsignale
---als auch differentielle, auf common mode basierende Taktsignale anliegen,
- die Sendeanordnung (S) die single-ended, auf Logikpegeln basierenden Daten- sowie Taktsignale und die differentiellen, auf common mode basierenden Daten- sowie Taktsignale zu einem gemeinsamen Signalstrom (SI) serialisiert,
- mindestens ein Referenztakt mittels mindestens eines Taktgenerators (PS) auf mindestens einer Taktleitung (TL) erzeugt wird,
- ein Stopp-Zustand auf der Taktleitung (TL) mittels mindestens eines dem Taktgenerator (PS) vorgeschalteten Erkennungs-/Steuerungsmittels (PD) erkannt wird,
- mindestens ein dem Stopp-Zustand zugeordnetes Abschaltsignal mittels des Erkennungs-/Steuerungsmittels (PD) zeitlich verzögert an den Taktgenerator (PS) weitergegeben wird, mittels welchen Abschaltsignals der Taktgenerator (PS) und mindestens ein dem Taktgenerator (PS) nachgeschalteter Serialisierer (SE) in den Ruhezustand geschaltet werden, und
- der Serialisierer (SE) mit dem auf der Taktleitung (TL) erkannten Stopp-Zustand beaufschlagt wird und in den zu mindestens einer Empfangsanordnung (E) zu übertragenden gemeinsamen Signalstrom mindestens eine dem Stopp-Zustand zugeordnete Stopp-Sequenz einfügt, aufgrund welcher Stopp-Sequenz die Empfangsanordnung (E) erkennt, dass die Übertragung nach Ablauf eines definierten Zeitintervalls abgeschaltet wird.

12. Verfahren gemäß Anspruch 11, **dadurch gekennzeichnet, dass** das definierte Zeitintervall der zeitlichen Verzögerung des Abschaltsignals zugeordnet wird.

13. Verfahren gemäß Anspruch 12, **dadurch gekennzeichnet, dass** das definierte Zeitintervall zumindest in etwa der zeitlichen Verzögerung des Abschaltsignals entspricht.

14. Verfahren gemäß mindestens einem der Ansprüche 11 bis 13 und/oder Verwendung mindestens einer Schaltungsanordnung (S, E) gemäß Anspruch 10 beim zumindest vorübergehenden Beenden mindestens einer gleichzeitigen seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, Übertragung sowohl von single-ended, auf Logikpegeln basierenden Daten- und Taktsignalen als auch von differentiellen, insbesondere auf common mode basierenden, Daten- und Taktsignalen, insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera (KA) und/oder mindestens einem Applikationsprozessor (AP), und mindestens einer Datensenke, insbesondere mindestens einem Applikationsprozessor (AP) und/oder mindestens einer, zum Beispiel hochauflösenden und/oder zum Beispiel als Bildsenke fungierenden, Anzeigeeinheit (DU), zum Beispiel mindestens einem Display oder mindestens einem Monitor.

## Claims

1. A sending arrangement (S), being providable:
- with data signals transportable on at least one data line (CH0+, CH0-, CH1+, CH1-, CH2+, CH2-, CH3+, CH3-) wherein each of the data lines (CH0+, CH0-, CH1+, CH1-, CH2+, CH2-, CH3+, CH3-) is provided with
-- single-ended logic-level-based data signals (HSD0, HSD1, HSD2, HSD3) as well as
-- differential common-mode-based data signals (DD0+, DD0-, DD1+, DD1-, DD2+, DD2-, DD3+, DD3-), and
- with clock signals transportable on at least one clock line (CLK+, CLK-) wherein each of the clock lines (CLK+, CLK-) is provided with
-- single-ended logic-level-based clock signals as well as
-- differential common-mode-based clock signals,
- wherein the sending arrangement (S) serializes the single-ended logic-level-based data signals and clock signals and the differential common-mode-based data signals and clock signals in the form of a common signal stream (SI) and
- wherein the sending arrangement (S) comprises:
-- at least one clock generator (PS) for generating at least one reference clock on at least one clock line (TL),
-- at least one serializer (SE) connected downstream of the clock generator (PS), the serializer (SE) being provided with a stop state recognizable on the clock line (TL) and inserting at least one stop sequence assigned to the stop state into the common signal stream (SI), due to which stop sequence it is recognizable for at least one receiving arrangement (E) that the transmission of the common signal stream (SI) is switched off upon expiry of at least one defined time interval, and
-- at least one detection/control means (PD) connected upstream of the clock generator (PS) for recognizing the stop state on the clock line (TL) and for time-delayed passing on of at least one switch-off signal assigned to the stop state to the clock generator (PS) by means of which switch-off signal the clock generator (PS) and the serializer (SE) are switched to idle state.

2. The sending arrangement according to claim 1, **characterized in that** the sending arrangement (S) is assigned to at least one data source, the data source being embodied
- in particular as at least one camera (KA) and/or
- in particular as at least one application processor (AP).

3. The sending arrangement according to claim 1 or 2, **characterized in that** the receiving arrangement (E) is assigned to at least one data sink, the data sink being embodied
- in particular as at least one application processor (AP) and/or
- in particular as at least one display unit (DU).

4. The sending arrangement according to at least one of claims 1 to 3, **characterized in that** the clock generator (PS) is embodied as at least one phase-locked loop, in particular as at least one clock multiplier unit.

5. The sending arrangement according to at least one of claims 1 to 4, **characterized in that** the serializer (SE) comprises
- at least one framer (FR) for generating at least one frame recognizable in the receiving arrangement (E) for the common signal stream (SI) as well as
- at least one multiplexer (MU) connected downstream of the framer (FR) for generating the common signal stream (SI).

6. The sending arrangement according to claim 5, **characterized in that** the framer (FR) is providable with the single-ended, logic-level-based data signals (HSD0, HSD1, HSD2, HSD3) as well as with the differential data signals (DD0+, DD0-, DD1+, DD1-, DD2+, DD2-, DD3+, DD3-) and embeds, by means of at least one coder (KO), in particular by means of at least one 5b/6b coder block, the differential data signals (DD0+, DD0-, DD1+, DD1-, DD2+, DD2-, DD3+, DD3-) in the stream of the single-ended, logic-level-based data signals (HSD0, HSD1, HSD2, HSD3).

7. The sending arrangement according to at least one of claims 1 to 6, **characterized in that** the detection/control means (PD) is embodied as at least one power down controller.

8. The sending arrangement according to at least one of claims 1 to 7, **characterized in that** at least one sending interface logic (LS) for picking up the data signals and clock signals is connected upstream of the serializer (SE) and of the detection/control means (PD), the sending interface logic (LS) in particular assigned to at least one, for example up to four bit-wide, CSI and/or CSI-2 and/or CSI-3 and/or DSI and/or DSI-2 interface of the data source.

9. The sending arrangement according to claim 8, **characterized in that** the sending interface logic (LS) comprises at least one state machine for correctly interpreting the data signals.

10. A circuit arrangement (S, E), comprising
- at least one sending arrangement (S) according to at least one of claims 1 to 9 as well as
- the at least one receiving arrangement (E).

11. A method wherein
- at least one sending arrangement (S) is provided with:
-- with data signals transportable on at least one data line (CH0+, CH0-, CH1+, CH1-, CH2+, CH2-, CH3+, CH3-) wherein each of the data lines (CH0+, CH0-, CH1+, CH1-, CH2+, CH2-, CH3+, CH3-) is provided with
--- single-ended logic-level-based data signals (HSD0, HSD1, HSD2, HSD3) as well as
--- differential common-mode-based data signals (DD0+, DD0-, DD1+, DD1-, DD2+, DD2-, DD3+, DD3-), and
-- with clock signals transportable on at least one clock line (CLK+, CLK-) wherein each of the clock lines (CLK+, CLK-) is provided with
--- single-ended logic-level-based clock signals as well as
--- differential common-mode-based clock signals,
- the sending arrangement (S) serializes the single-ended logic-level-based data signals and clock signals and the differential common-mode-based data signals and clock signals in the form of a common signal stream (SI),
- at least one reference clock is generated by means of at least one clock generator (PS) on at least one clock line (TL),
- a stop state on the clock line (TL) is recognized by means of at least one detection/control means (PD) connected upstream of the clock generator (PS),
- at least one switch-off signal assigned to the stop state is time-delayed passed on to the clock generator (PS) by means of the detection/control means (PD) by means of which switch-off signal the clock generator (PS) and at least one serializer (SE) connected downstream of the clock generator (PS) are switched to idle state, and
- the serializer (SE) is provided with the stop state recognized on the clock line (TL) and inserts at least one stop sequence assigned to the stop state into the common signal stream to be transmitted to at least one receiving arrangement (E) due to which stop sequence the receiving arrangement (E) recognizes that the transmission is switched off upon expiry of a defined time interval.

12. The method according to claim 11, **characterized in that** the defined time interval is assigned to the time delay of the switch-off signal.

13. The method according to claim 12, **characterized in that** the defined time interval at least approximately corresponds to the time delay of the switch-off signal.

14. The method according to at least one of claims 11 to 13 and/or use of at least one circuit arrangement (S, E) according to claim 10 during at least temporary termination of at least one simultaneous serial and/or bundled, in particular CSI protocol-based and/or CSI-2 protocol-based and/or CSI-3 protocol-based and/or DSI protocol-based and/or DSI-2 protocol-based, transmission of single-ended logic-level-based data signals and clock signals as well as of differential, in particular common-mode-based, data signals and clock signals, in particular of D-PHY data signals and D-PHY clock signals, for example of up to four bit-wide MIPI-D-PHY data signals and MIPI-D-PHY clock signals, between at least one data source, in particular at least one camera (KA), for example of high resolution and/or for example acting as an image source, and/or at least one application processor (AP), and at least one data sink, in particular at least one application processor (AP) and/or at least one display unit (DU), for example of high resolution and/or for example acting as an image sink, for example at least one display or at least one monitor.

## Revendications

1. Dispositif d'émission (S), qui peut être fourni :
- avec des signaux de données transportables sur au moins une ligne de données (CH0+, CH0-, CH1+, CH1-, CH2+, CH2-, CH3+, CH3-), où
-- des signaux de données (HSD0, HSD1, HSD2, HSD3) asymétriques basés sur des niveaux logiques ainsi que
-- des signaux de données (DD0+, DD0-, DD1+, DD1-, DD2+, DD2-, DD3+, DD3-) différentiels basés sur le mode commun
sont présents sur chacune des lignes de données (CH0+, CH0-, CH1+, CH1-, CH2+, CH2-, CH3+, CH3-), et
- avec des signaux d'horloge transportables sur au moins une ligne d'horloge (CLK+, CLK-), où
-- des signaux d'horloge asymétriques basés sur des niveaux logiques ainsi que
-- des signaux d'horloge différentiels basés sur le mode commun
sont présents sur chacune des lignes d'horloge (CLK+, CLK-),
- le dispositif d'émission (S) sérialisant les signaux de données et d'horloge asymétriques basés sur des niveaux logiques et les signaux de données et d'horloge différentiels basés sur le mode commun sous la forme d'un flux de signaux (SI) commun, et
- le dispositif d'émission (S) comportant :
-- au moins un générateur d'horloge (PS) pour générer au moins une horloge de référence sur au moins une ligne d'horloge (TL),
-- au moins un sérialiseur (SE), connecté en aval du générateur d'horloge (PS), étant fourni avec un état d'arrêt reconnaissable sur la ligne d'horloge (TL), et insérant au moins une séquence d'arrêt assignée à l'état d'arrêt dans le flux de signaux (SI) commun, sur la base de laquelle séquence d'arrêt peut être détecté pour au moins un dispositif de réception (E) en ce que la transmission du flux de signaux (SI) commun est interrompue après l'expiration d'au moins un intervalle de temps défini, et
-- au moins un moyen de détection/contrôle (PD), connecté en amont du générateur d'horloge (PS), pour détecter l'état d'arrêt sur la ligne d'horloge (TL) et pour la transmission retardée d'au moins un signal d'arrêt assigné à l'état d'arrêt au générateur d'horloge (PS), au moyen duquel signal d'arrêt le générateur d'horloge (PS) et le sérialiseur (SE) sont mis à l'état d'inactivité.

2. Dispositif d'émission selon la revendication 1, **caractérisé en ce que** le dispositif d'émission (S) est assigné à au moins une source de données, formée
- en particulier comme au moins une caméra (KA) et/ou
- en particulier comme au moins un processeur d'application (AP).

3. Dispositif d'émission selon la revendication 1 ou 2, **caractérisé en ce que** le dispositif de réception (E) est assigné à au moins un collecteur de données, formé
- en particulier comme au moins un processeur d'application (AP) et/ou
- en particulier comme au moins une unité d'affichage (DU).

4. Dispositif d'émission selon au moins l'une des revendications 1 à 3, **caractérisé en ce que** le générateur d'horloge (PS) est formé comme au moins une phase-locked loop, en particulier comme au moins une clock multiplier unit.

5. Dispositif d'émission selon au moins l'une des revendications 1 à 4, **caractérisé en ce que** le sérialiseur (SE) comporte
- au moins un encadreur (FR) pour générer au moins un cadre pour le flux de signaux (SI) commun reconnaissable dans le dispositif de réception (E) et
- au moins un multiplexeur (MU), connecté en aval du encadreur (FR), pour générer le flux de signaux (SI) commun.

6. Dispositif d'émission selon la revendication 5, **caractérisé en ce que** l'encadreur (FR) peut être fourni avec les signaux de données (HSD0, HSD1, HSD2, HSD3) asymétriques basés sur des niveaux logiques ainsi que avec les signaux de données (DD0+, DD0-, DD1+, DD1-, DD2+, DD2-, DD3+, DD3-) différentiels et intègre les signaux de données (DD0+, DD0-, DD1+, DD1-, DD2+, DD2-, DD3+, DD3-) différentiels dans le flux de signaux de données (HSD0, HSD1, HSD2, HSD3) asymétriques basés sur des niveaux logiques au moyen d'au moins un codeur (KO), en particulier au moyen d'au moins un bloc de codage 5b/6b.

7. Dispositif d'émission selon au moins l'une des revendications 1 à 6, **caractérisé en ce que** le moyen de détection/contrôle (PD) est formé comme au moins un contrôleur de mise hors tension.

8. Dispositif d'émission selon au moins l'une des revendications 1 à 7, **caractérisé en ce qu'**au moins une logique d'interface d'émission (LS) est connectée en amont du sérialiseur (SE) et du moyen de détection/contrôle (PD) pour recevoir les signaux de données et signaux d'horloge, la logique d'interface d'émission (LS) en particulier étant assignée à au moins une CSI et/ou CSI-2 et/ou CSI-3 et/ou DSI et/ou DSI-2 interface (IS) de la source de données, l'interface (IS) par exemple étant jusqu'à quatre bits de large.

9. Dispositif d'émission selon la revendication 8, **caractérisé en ce que** la logique d'interface d'émission (LS) comporte au moins une machine d'état pour correctement interpréter des signaux de données.

10. Dispositif de circuit (S, E), comportant
- au moins un dispositif d'émission (S) selon au moins l'une des revendications 1 à 9 et
- l'au moins un dispositif de réception (E).

11. Procédé, où
- au moins un dispositif d'émission (S) est fourni :
-- avec des signaux de données transportables sur au moins une ligne de données (CH0+, CH0-, CH1+, CH1-, CH2+, CH2-, CH3+, CH3-), où
---des signaux de données (HSD0, HSD1, HSD2, HSD3) asymétriques basés sur des niveaux logiques ainsi que
---des signaux de données (DD0+, DD0-, DD1+, DD1-, DD2+, DD2-, DD3+, DD3-) différentiels basés sur le mode commun
sont présents sur chacune des lignes de données (CH0+, CH0-, CH1+, CH1-, CH2+, CH2-, CH3+, CH3-), et
-- avec des signaux d'horloge transportables sur au moins une ligne d'horloge (CLK+, CLK-), où
--- des signaux d'horloge asymétriques basés sur des niveaux logiques ainsi que
--- des signaux d'horloge différentiels basés sur le mode commun
sont présents sur chacune des lignes d'horloge (CLK+, CLK-),
- le dispositif d'émission (S) sérialise les signaux de données et d'horloge asymétriques basés sur des niveaux logiques et les signaux de données et d'horloge différentiels basés sur le mode commun sous la forme d'un flux de signaux (SI) commun,
- au moins une horloge de référence est générée par au moins un générateur d'horloge (PS) sur au moins une ligne d'horloge (TL),
- un état d'arrêt est détecté sur la ligne d'horloge (TL) au moyen d'au moins un moyen de détection/contrôle (PD) connecté en amont du générateur d'horloge (PS),
- au moins un signal d'arrêt assigné à l'état d'arrêt est transmis avec un retardement au générateur d'horloge (PS) au moyen du moyen de détection/contrôle (PD), au moyen duquel signal d'arrêt le générateur d'horloge (PS) et au moins un sérialiseur (SE) connecté en aval du générateur d'horloge (PS) sont mis à l'état d'inactivité, et
- le sérialiseur (SE) est fourni avec l'état d'arrêt détecté sur la ligne d'horloge (TL) et insère au moins une séquence d'arrêt assignée à l'état d'arrêt dans le flux de signaux commun à être transmis à au moins un dispositif de réception (E), sur la base de laquelle séquence d'arrêt le dispositif de réception (E) détecte que la transmission est interrompue après l'expiration d'un intervalle de temps défini.

12. Procédé selon la revendication 11, **caractérisé en ce que** l'intervalle de temps défini est assigné au retardement du signal d'arrêt.

13. Procédé selon la revendication 12, **caractérisé en ce que** l'intervalle de temps défini correspond au moins approximativement au retardement du signal d'arrêt.

14. Procédé selon au moins l'une des revendications 11 à 13 et/ou utilisation d'au moins un dispositif de circuit (S, E) selon la revendication 10 lors de la termination au moins temporaire d'au moins une transmission simultanée série et/ou groupée, en particulier basée sur le protocole CSI et/ou basée sur le protocole CSI-2 et/ou basée sur le protocole CSI-3 et/ou basée sur le protocole DSI et/ou basée sur le protocole DSI-2, de signaux de données et d'horloge asymétriques basés sur des niveaux logiques ainsi que de signaux de données et d'horloge différentiels, en particulier basés sur le mode commun, en particulier de signaux de données D-PHY et signaux d'horloge D-PHY, par exemple de signaux de données MIPI-D-PHY et signaux d'horloge MIPI-D-PHY jusqu'à quatre bits de largeur, entre au moins une source de données, en particulier au moins une caméra (KA), par exemple à haute résolution et/ou par exemple dans la fonction d'une source d'image, et/ou au moins un processeur d'application (AP), et au moins un collecteur de données, en particulier au moins un processeur d'application (AP) et/ou au moins une unité d'affichage (DU), par exemple à haute résolution et/ou par exemple dans la fonction d'un collecteur d'image, par exemple au moins un écran ou au moins un moniteur.
